# FASCICULE DE BREVET EUROPEEN

(11) **EP 1 423 287 B1**
(45) Date de publication et mention de la délivrance du brevet: **25.05.2005**
(21) Numéro de dépôt: 02748957.4
(22) Date de dépôt: 18.06.2002
(51) Int. Cl.: B60G 21/055, B60G 21/05, B60G 7/00

(54) **TRAIN ARRIERE POUR VEHICULE AUTOMOBILE DU TYPE A BRAS TIRES LONGITUDINAUX AVEC DES BARRES DE MAINTIEN OU DE GUIDAGE TRANSVERSAL**
HINTERACHSE FÜR EIN KRAFTFAHRZEUG MIT GEZOGENEN AUFHÄNGUNGSLENKERN UND QUERFÜHRUNGSSTANGEN
MOTOR VEHICLE REAR TRAIN COMPRISING LONGITUDINAL TRAILED ARMS WITH TRANSVERSE RETAINING OR GUIDING LINKS

(30) Priorité: 07.09.2001 FR 0111611
(43) Date de publication de la demande: 02.06.2004
(73) Titulaire: Peugeot Citroen Automobiles SA, 92200 Neuilly sur Seine (FR)
(72) Inventeur: NICOLAS, Daniel, F-78360 Montesson (FR)
(74) Mandataire: Thinat, Michel
(86) Numéro de dépôt international: PCT/FR2002/002101
(87) Numéro de publication internationale: WO 2003/022608

(56) Documents cités:
- EP-A- 0 098 812
- EP-A- 0 197 850
- EP-A- 0 292 392
- EP-A- 0 649 764
- WO-A-97/12770
- DE-A- 3 842 339
- DE-A- 3 912 520
- FR-A- 1 219 862
- FR-A- 2 738 190
- FR-A- 2 810 273
- US-A- 3 773 349

## Description

La présente invention concerne un train arrière pour véhicule automobile du type à deux bras tirés longitudinaux.

Selon un tel train arrière, les deux bras tirés de support des fusées de roues sont reliés entre eux par une traverse tubulaire dont le corps est fixé à la caisse du véhicule par deux pattes avant et deux pattes arrière solidaires du corps et reliées à la caisse par des articulations élastiques sous forme de cales. Chaque bras tiré est monté pivotant à l'extrémité correspondante de la traverse autour d'un axe transversal par l'intermédiaire d'un roulement à aiguilles pour permettre un débattement dans- le plan vertical de chaque roue arrière.

La conception de ce train arrière rend difficile d'empêcher des braquages induits du train sous des efforts transversaux importants à cause de l'élasticité des cales de liaison des bras tirés à la caisse et surtout à cause de la déformation des supports de roue, en particulier des bras tirés eux-mêmes.

Ainsi, le problème que cherche à résoudre l'invention réside dans l'élimination des moments de flexion sur les bras tirés du train arrière dans le cas d'efforts transversaux sévères appliqués à celui-ci.

Pour résoudre ce problème, l'invention propose un train arrière pour véhicule automobile, comprenant deux bras tirés longitudinaux de support des fusées de roues reliés entre eux par une traverse tubulaire fixée à la caisse du véhicule par des pattes avant et arrière solidaires de la caisse par des articulations élastiques et montés pivotant à l'extrémité correspondante de la traverse autour d'un axe transversal et qui est caractérisé en ce qu'il comprend une pièce support fixée rigidement sensiblement au milieu de la traverse tubulaire; et deux barres de maintien sensiblement transversales, dont chacune a une extrémité fixée à la pièce support par une articulation et son extrémité opposée fixée au pivot de roue correspondant par une articulation, chaque barre de maintien étant agencée de façon à avoir une longueur variable suivant les débattements verticaux de la roue en attaque et en détente.

Selon un aspect avantageux de l'invention, la pièce support comprend un corps de fixation à la traverse et une pièce sensiblement en forme d'étrier de support des articulations des deux barres de maintien, solidaire du corps de fixation et située à l'arrière de la traverse.

Selon un premier mode de réalisation, le corps de fixation peut enserrer la traverse et être fixé à celle-ci par deux brides situées sous la traverse dans le plan vertical passant par l'axe de la traverse, l'une des brides de fixation définissant l'une des branches de la pièce en étrier:

De préférence, le corps de fixation peut comprendre dans ce premier mode de réalisation deux demi-coquilles enserrant la traverse, et la paroi de la pièce en étrier en arrière de la traverse peut être solidaire de la demi-coquille arrière du corps de fixation.

Selon un deuxième mode de réalisation, le corps de fixation peut comprendre deux demi-coquilles disjointes enserrant la traverse et fixées à celle-ci par deux paires de brides appartenant respectivement aux deux demi-coquilles.

De préférence, la pièce en forme d'étrier comprend dans ce deuxième mode de réalisation deux plaques planes parallèles dont le plan médian passe par l'axe de la traverse.

Selon un premier mode de réalisation, chaque barre de maintien comprend à sa partie d'extrémité reliée à la pièce support, deux éléments télescopiques externe et interne comprenant respectivement deux butées d'extrémité transversales fixes entre lesquelles est en appui un organe élastique pouvant se comprimer axialement lorsque la roue débat verticalement en attaque.

Selon une variante de réalisation, l'organe élastique est un ressort hélicoïdal de compression.

Selon une autre variante de réalisation, l'organe élastique est un bloc de caoutchouc tronconique solidaire de la butée d'extrémité de l'élément télescopique interne.

L'élément télescopique externe de chaque barre de maintien est relié à son extrémité à la pièce support par l'articulation correspondante qui est élastique ou à rotule.

Selon un second mode de réalisation, l'articulation reliant chaque barre de maintien à la pièce support est élastique et comprend un manchon à base de caoutchouc à axe longitudinal parallèle à l'axe longitudinal du véhicule et ayant deux cavités internes diamétralement opposées permettant une déformation radiale du manchon lors des débattements verticaux de la roue.

Avantageusement, les cavités présentent chacune en section transversale la forme d'une lumière arquée.

De préférence, la pièce support est une pièce de fonderie en aluminium.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- la figure 1 est une vue en perspective d'un train arrière pour véhicule automobile conforme à l'invention, suivant un premier mode de réalisation de la pièce support ;
- la figure 2 est une vue partielle en coupe agrandie de la partie d'extrémité de l'une des deux barres de maintien suivant un premier mode de réalisation de l'invention utilisées dans le train arrière de la figure 1 ;
- la figure 3 est une vue partielle de dessus suivant la flèche III de la figure 2 ;
- la figure 4 représente schématiquement les différents débattements verticaux des roues arrière du véhicule pour expliquer le fonctionnement du train arrière conforme à l'invention ;
- la figure 5 est une vue partielle en coupe semblable à celle de la figure 2 et représentant une variante de réalisation de la barre de maintien de l'invention ;
- la figure 6 est une vue en coupe agrandie suivant un second mode de réalisation de l'articulation de l'extrémité d'une barre de maintien conforme à l'invention,
- la figure 7 est une vue de dessus suivant la flèche VII de la figure 6,
- la figure 8 est une vue identique à la figure 1 suivant un deuxième mode de réalisation de la pièce de support ; et
- la figure 9 est une vue en coupe de la pièce support suivant le deuxième mode de réalisation illustré sur la figure 8.

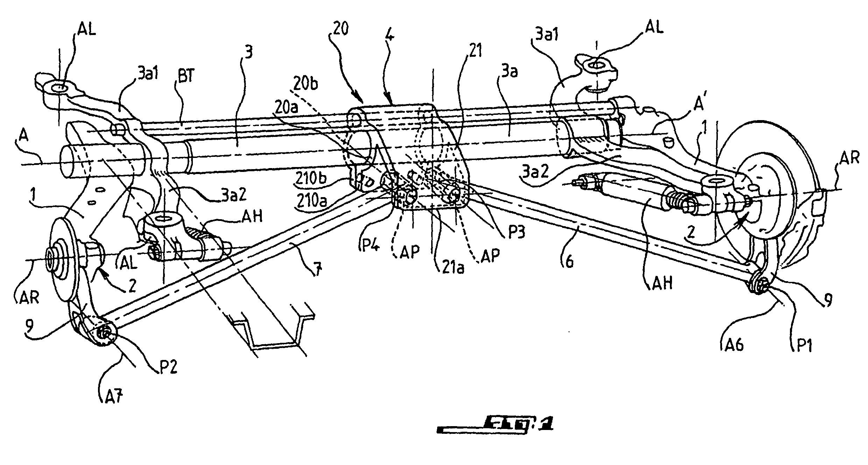

En se reportant à la figure 1, le train arrière pour véhicule automobile comprend deux bras tirés longitudinaux opposés 1 de support des fusées 2 des roues arrière du véhicule et qui sont reliés entre eux par une traverse tubulaire 3 dont le corps 3a est fixé à la caisse C du véhicule par deux pattes avant 3a1 et deux pattes arrière 3a2 solidaires du corps 3a pour former un cadre fixe et reliées à la caisse C par des articulations élastiques AL sous forme de cales. Chaque bras tiré 1 est monté pivotant à l'extrémité correspondante de la traverse 3 autour d'un axe transversal AA' par l'intermédiaire d'un roulement à aiguilles (non représenté) pour permettre un débattement dans le plan vertical de chaque roue arrière.

Le train arrière comprend en outre deux barres transversales déformables en torsion BT, dont une seule est représentée, et situées de part et d'autre de la traverse tubulaire 3. L'une des barres BT a une extrémité ancrée dont l'une correspondante des pattes avant 3a1 ou arrière 3a2 et son extrémité opposée ancrée dans une partie d'extrémité solidaire du corps 3a de la traverse 3, tandis que l'autre barre BT a une extrémité ancrée dans l'autre patte arrière 3a2 ou avant 3a1 et son extrémité opposée ancrée dans une partie d'extrémité solidaire du corps 3a de la traverse 3 à l'opposé de la première partie d'extrémité d'ancrage de la première barre BT.

Un amortisseur hydraulique à double effet AH est interposé entre l'extrémité de chaque patte arrière 3a2 et le bras tiré correspondant 1.

Selon l'invention, le train arrière comprend également deux barres dites de maintien 6, 7 sensiblement transversales à l'axe longitudinal du véhicule et dont chacune a une extrémité fixée à une pièce support 4 par une articulation AP, la pièce support 4 étant fixée rigidement à la traverse tubulaire 3 comme on le verra plus loin.

L'autre extrémité de chaque barre de maintien 6, 7 est fixée au pivot de la roue arrière correspondante par une articulation d'axe longitudinal A6 et A7 fixée à l'extrémité d'un étrier 9 solidaire du pivot de roue.

Chaque barre de maintien 6, 7 est agencée de façon à avoir une longueur variable suivant les débattements verticaux en attaque et en détente de la roue arrière correspondante et est inclinée de haut en bas à partir de son point d'ancrage P3, P4 à la pièce support 4.

Dans un premier mode de réalisation de la pièce support 4, celle-ci comprend un corps de fixation 20 à la traverse 3 et une pièce 21 sensiblement en forme d'étrier de support des articulations AP des deux barres de maintien 6, 7. La pièce 21 est solidaire par sa partie supérieure du corps de fixation 20. Elle est située à l'arrière de la traverse 3 suivant le sens de marche normal du véhicule.

Le corps de fixation 20 enserre la traverse tubulaire 3 et éventuellement une ou deux barres de torsion BT. La traverse 3 et les barres BT traversent donc latéralement le corps de fixation 20. Le corps de fixation 20 est fixé à la traverse tubulaire 3 par deux brides 210a et 210b sensiblement en forme de plaques, situées sous la traverse 3, dans le plan vertical passant par l'axe de la traverse tubulaire 3. Les brides sont pressées l'une contre l'autre par des moyens de serrage, par exemple des boulons. Dans le mode de réalisation de l'invention illustré sur la figure 1, la bride de fixation arrière 210a définit la branche avant de la pièce en étriér 21.

Le corps de fixation 20 comprend deux demi-coquilles 20a et 20b qui enserrent la traverse 3 respectivement par l'arrière et par l'avant. Ces deux demi-coquilles 20a et 20b sont solidaires par leur partie supérieure et comportent à leurs parties inférieures respectivement les brides 210a et 210b. Comme le montre la figure 1, l'étrier 21 comprend une branche arrière 21a en forme de plaque, parallèle à la bride de fixation 210a et solidaire de la demi-coquille arrière 20a du corps de fixation 20.

La pièce support 4 est de préférence une pièce de fonderie en aluminium. Elle peut également être usinée, et le matériau utilisé peut être de l'acier.

L'axe des articulations AP des barres de maintien 6 et 7 à la pièce support 4 est sensiblement parallèle à l'axe longitudinal du véhicule.

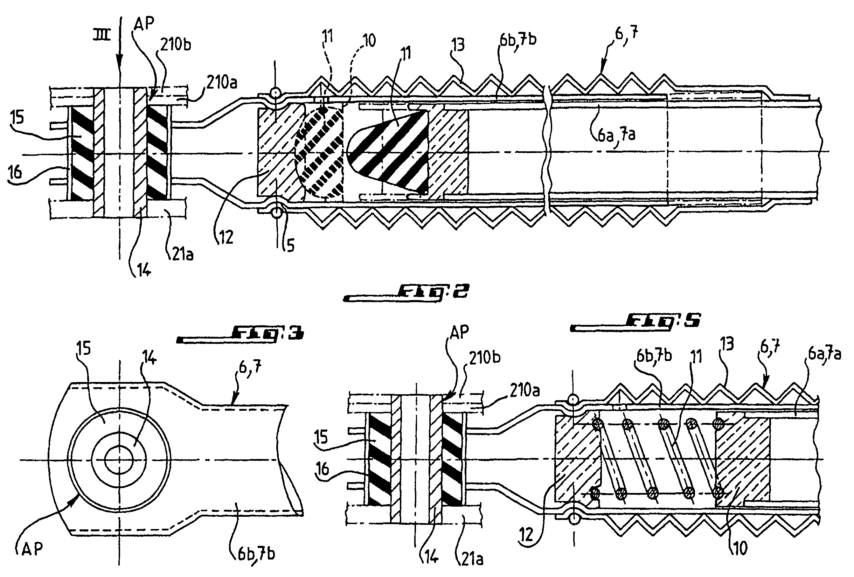

Chaque articulation AP vient s'insérer entre les deux branches de l'étrier 21, et leur est liée de façon élastique, comme décrit pour les deux modes de réalisation des barres de maintien 6 et 7 illustrés respectivement par les figures 2,3,5, et 6, 7, ou par une rotule.

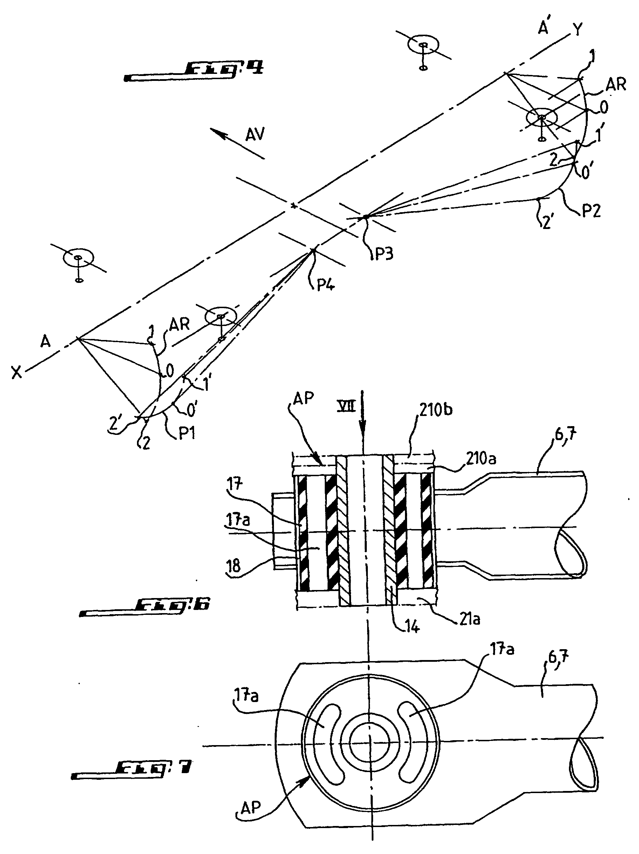

Selon le premier mode de réalisation représenté aux figures 2 et 3, chaque barre de maintien 6, 7 comprend à sa partie d'extrémité reliée à la pièce support 4 deux éléments tubulaires télescopiques respectivement interne 6a, 7a et externe 6b, 7b de façon à faire varier la distance entre le point d'ancrage P1, P2 de la barre de maintien 6, 7 à l'étrier 9 du pivot de roue correspondant et le point d'ancrage P3, P4 de l'extrémité opposée de la barre de maintien 6, 7 à la pièce support 4. Le point d'ancrage P3, P4 peut être une vis excentrique pour régler l'effort sur le plan de roue.

L'extrémité du tube télescopique interne 6a, 7a de la barre de maintien est obstruée par un bouchon cylindrique 10 emmanché à force dans le tube 6a, 7a et qui comporte un lamage 10a de réception de la base d'un bloc tronconique 11 en matériau à base de caoutchouc pouvant se déformer axialement par compression.

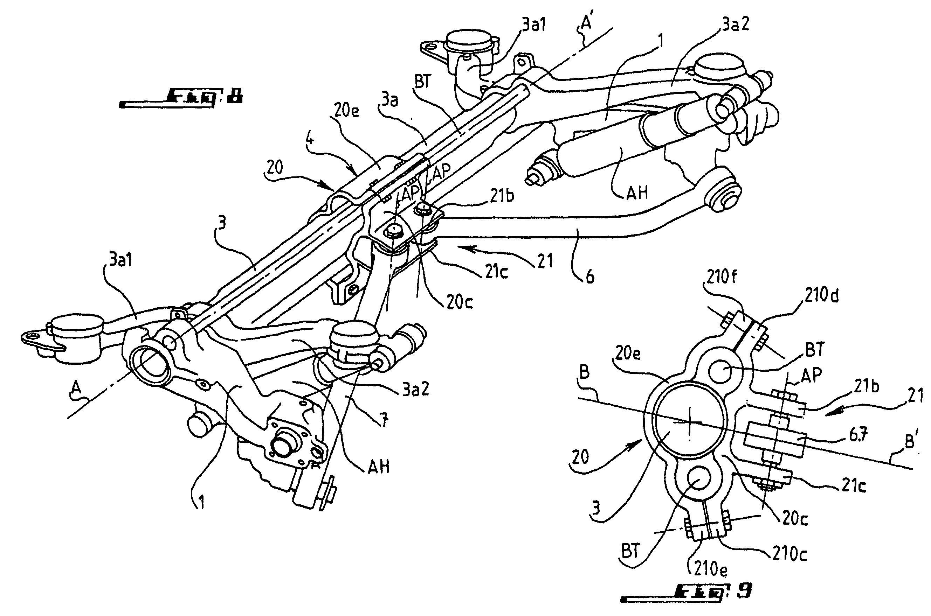

L'extrémité du tube télescopique externe 6b, 7b de la barre de maintien 6, 7 est également fermée par une butée cylindrique 12 située en face du bouchon 10 avec interposition du bloc en caoutchouc 11 pour permettre au bloc 11 de venir en appui sur la butée 12 et se déformer axialement par compression comme représenté en pointillés en figure 4 lorsque chaque roue arrière débat en attaque dans un plan vertical.

La butée cylindrique 12 est maintenue dans l'extrémité correspondante du tube externe 6b, 7b par un sertissage S de ce tube.

Les deux tubes télescopiques 6a, 7a et 6b, 7b sont rendus étanches de l'extérieur par un manchon externe en forme de soufflet 13.

L'extrémité du tube externe 6b, 7b prolongeant celle de réception de la butée 12 est aplatie pour constituer une partie de plus faible épaisseur supportée par l'axe 14 par l'intermédiaire d'une articulation élastique 15 constituée par un manchon en caoutchouc solidaire de l'axe 14. L'axe 14 est fixé rigidement par l'une de ses extrémités à la branche arrière 21a et par l'autre de ses extrémités à la bride 210a. Le manchon 15 couvre toute la longueur de l'axe 14 entre la branche arrière 21a et la bride 210a. Le manchon 15 est également fixé dans un fourreau métallique 16 fixé à l'extrémité aplatie du tube externe 6b, 7b transversalement à celle-ci.

Le manchon 15 peut être fixé à l'axe 14 et au fourreau 16 par un adhésif.

Selon une variante, l'articulation AP peut être du type à rotule.

La variante de réalisation représentée en figure 5 ne diffère de celle de la figure 2 que par la présence d'un ressort hélicoidal de compression 11 remplaçant le bloc en caoutchouc et interposé entre les deux butées extrêmes 10 et 12.

La figure 4 représente de façon schématique les débattements des roues arrière et donc des bras tirés 1 autour de l'axe de rotation A-A' et symbolisés par les points AR à partir de la position de référence 0. Ainsi, chaque roue arrière débat de la position "attaque" (1) à la position "détente" (2) autour de l'axe A-A' et les points d'ancrage P1 et P2, qui sont solidaires des roues arrière, subissent ces débattements comme symbolisé en (1') et (2') de part et d'autre de la position de référence (0') du point P1, P2. Les déplacements des points P1 et P2 entraînent une variation de longueur des droites P3, P1 et P2, P4 qui symbolisent respectivement les deux barres de maintien 6, 7. Ainsi, chaque barre de maintien 6, 7 suit le plus près possible le trajet théorique du bras tiré correspondant 1 dans la partie "roulage normal" et "attaque" où les effets de la force centrifuge s'exercent dans le sens de la compression de la barre 6, 7 et seront donc pris directement par celle-ci grâce à sa partie télescopique dont le tube interne 6a, 7a se déplacera dans le tube externe 6b, 7b vers la butée 12 de façon à comprimer axialement le bloc en caoutchouc 11 sur celle-ci.

Par contre, dans la partie "détente" du trajet théorique de chaque bras tiré 1, chaque point d'ancrage P1, P2 va tirer la barre de maintien correspondante 6, 7 dans un sens d'allongement de celle-ci, c'est-à-dire que le tube interne 6a, 7a de la partie télescopique de la barre de maintien se déplacera dans le tube externe 6b, 7b en s'éloignant de la butée 12.

La configuration télescopique des parties d'extrémités des deux barres de maintien 6, 7 permet donc de maîtriser le plan de roue arrière pour diminuer le braquage induit par les efforts transversaux et garantit une bonne épure du parallélisme des roues.

Le second mode de réalisation représenté aux figures 6 et 7 assure la même fonction que le premier mode de réalisation ci-dessus et va être maintenant décrit.

Selon ce second mode de réalisation, l'articulation AP reliant l'extrémité de chaque barre de maintien 6, 7 à la pièce support 4 comprend un manchon en caoutchouc 17 monté sur l'axe transversal 14 coaxialement à celui-ci et logé dans un fourreau métallique 18 solidaire de l'extrémité aplatie de la barre de maintien 6, 7 transversalement à celle-ci. Le manchon 17 s'étend sur toute la longueur de l'axe 14 entre la branche arrière 21a et la bride 210a et a ainsi son axe longitudinal parallèle à l'axe longitudinal du véhicule.

Chaque manchon 17 comprend deux cavités internes diamétralement opposées 17a s'étendant dans une direction parallèle à l'axe longitudinal du manchon et chacune en forme de lumière arquée. Les deux cavités 17a permettent une déformation radiale du manchon 17 par compression lorsque la roue arrière correspondante débat en attaque où les effets de la force centrifuge s'exercent dans le sens de la compression de la barre de maintien correspondante 6, 7.

Un deuxième mode de réalisation de la pièce support 4, constituant le mode de réalisation préféré, est illustré sur les figures 8 et 9. Les pièces remplissant les mêmes fonctions que dans le première mode de réalisation gardent la même référence et ne seront pas décrites. Ce second mode de réalisation diffère du premier mode de réalisation décrit ci-dessus d'abord en ce que le corps de fixation 20 comprend deux demi-coquilles 20c et 20e complètement disjointes qui sont solidarisées sur la traverse 3 par deux paires de brides 210c/210d et 210e/210f appartenant respectivement aux demi-coquilles 20c et 20e. Les brides opposées 210c et 210e sont situées sous la traverse 3, dans un plan passant par son axe A-A', légèrement décalé par rapport à la verticale dans le sens inverse des aiguilles d'une montre (figure 9). Les brides opposées 210d et 210f sont situées au-dessus de la traverse 3, dans un plan passant par son axe A-A', légèrement décalé par rapport à la verticale dans le sens des aiguilles d'une montre. Les brides 210c/210e et 210d/210f sont pressées l'une contre l'autre par exemple par des boutons.

Ce deuxième mode de réalisation diffère également du premier mode de réalisation précédent en ce que la pièce en forme d'étrier 21 comprend deux plaques planes parallèles 21b et 21c, dont le plan médian B-B' passe par l'axe A-A' de la traverse 3. Cette pièce 21 est solidaire de la demi-coquille 20c et s'étend à partir de celle-ci vers l'arrière. Les plaques 21b et 21c sont légèrement inclinées vers le bas. L'axe d'articulation AP des barres de maintien 6 et 7 à la pièce de support 4 est perpendiculaire au plan BB'.

Ce deuxième mode de réalisation du corps de fixation 20 peut être utilisé conjointement avec l'un quelconque des deux modes de réalisation des barres de maintien 6 et 7 (télescopiques ou munies d'articulations élastiques présentant des cavités internes), les deux variantes de réalisation de l'organe élastique dans le cas où les barres de maintien sont télescopiques (bloc de caoutchouc ou ressort hélicoïdal), et la variante de réalisation où l'articulation AP est à rotule.

L'invention propose ainsi plusieurs solutions qui permettent de reprendre en appui la totalité des efforts transversaux exercés sur le train arrière et qui passent directement sur la caisse sans solliciter les éléments du train arrière en déformation, c'est-à-dire les bras tirés et/ou les cales de liaison de ceux-ci à la caisse du véhicule.

L'allongement de chaque barre de maintien vers la détente permet de libérer les contraintes internes, qui autrement interdiraient le libre débattement du train arrière.

## Revendications

1. Train arrière pour véhicule automobile, comprenant deux bras tirés longitudinaux (1) de support des roues arrière reliés entre eux par une traverse tubulaise (3) fixée à la caisse (C) du véhicule par deux pattes avant (3a1) et deux pattes arrière (3a2) solidaires de la caisse (C) par des liaisons élastiques (AL) et montés pivotant à l'extrémité correspondante de la traverse (3) autour d'un axe transversal, **caractérisé en ce qu'**il comprend une pièce support (4) fixée rigidement sensiblement au milieu de la traverse tubulaire (3); et deux barres de maintien sensiblement transversales (6, 7) dont chacune a une extrémité fixée à la pièce support (4) par une articulation (AP) et son extrémité opposée fixée au pivot de roue correspondant (9) par une articulation (A6, A7), chaque barre de maintien (6, 7) étant agencée de façon à avoir une longueur variable suivant les débattements verticaux de, la roue en attaque et en détente.

2. Train arrière selon la revendication 1, **caractérisé en ce que** la pièce support (4) comprend un corps de fixation (20) à la traverse (3) et une pièce (21) sensiblement en forme d'étrier de support des articulations (AP) des deux barres de maintien (6, 7), solidaire du corps de fixation (20) et située à l'arrière de la traverse (3).

3. Train arrière selon la revendication 2, **caractérisé en ce que** le corps de fixation (20) enserre la traverse (3) et est fixé à celle-ci par deux brides (210a, 210b) situées sous la traverse (3) dans le plan vertical passant par l'axe de la traverse (3), l'une des brides de fixation définissant l'une des branches de la pièce en étrier (21).

4. Train arrière selon la revendication 3, **caractérisé en ce que** le corps de fixation (20) comprend deux demi-coquilles (20a, 20b) enserrant la traverse (3) et **en ce que** la paroi de la pièce en étrier (21) en arrière de la traverse (3) est solidaire de la demi-coquille arrière (20a) du corps de fixation (20).

5. Train arrière selon la revendication 2, **caractérisée en ce que** le corps de fixation (20) comprend deux demi-coquilles disjointes (20c, 20e) enserrant la traverse (3), et fixées à celle-ci par deux paires de brides (210c, 210d) et (210e, 210f) appartenant respectivement aux demi-coquilles (20c) et (20e).

6. Train arrière selon la revendication 5, **caractérisé en ce que** la pièce (21) comprend deux plaques planes parallèles (21b, 21c) dont le plan médian passe par l'axe de la traverse (3).

7. Train arrière selon l'une des revendications précédentes, **caractérisé en ce que** chaque barre de maintien (6, 7) comprend à sa partie d'extrémité reliée à la pièce support (4), deux éléments télescopiques (6a, 7a ; 6b, 7b) externe et interne comprenant respectivement deux butées d'extrémité transversales fixes (10, 12) entre lesquelles est en appui un organe élastique (11) pouvant se comprimer axialement lorsque la roue débat verticalement en attaque.

8. Train arrière selon la revendication 7, **caractérisé en ce que** l'organe élastique (11) est un ressort hélicoïdal de compression.

9. Train arrière selon la revendication 7, **caractérisé en ce que** l'organe élastique (11) est un bloc de caoutchouc tronconique solidaire de la butée d'extrémité de l'élément télescopique interne (6a, 7a).

10. Train arrière selon l'une des revendications 7 à 9, **caractérisé en ce que** l'élément télescopique externe (6b, 7b) de chaque barre de maintien (6, 7) est relié à son extrémité à la pièce support (4) par l'articulation correspondante qui est élastique ou à rotule.

11. Train arrière selon les revendications 1 à 6, **caractérisé en ce que** l'articulation (AP) reliant chaque barre de maintien (6, 7) à la pièce support (4) est élastique et comprend un manchon à base de caoutchouc (17) à axe longitudinal parallèle à l'axe longitudinal du véhicule et ayant deux cavités internes diamétralement opposées (17a) permettant une déformation radiale du manchon (17) lors des débattements verticaux de la roue.

12. Train arrière selon la revendication 11, **caractérisé en ce que** les cavités (17a) présentent chacune en section transversale la forme d'une lumière arquée.

13. Train arrière selon l'une des revendications précédentes, **caractérisé en ce que** la pièce support (4) est une pièce de fonderie en aluminium.

## Patentansprüche

1. Hinterachse für ein Kraftfahrzeug, mit zwei gezogenen Längslenkern (1) zum Abstützen der Hinterräder, die über einen rohrförmigen Querträger (3) miteinander verbunden sind, der am Fahrzeugaufbau (C) über zwei vordere Laschen (3a1) und zwei hintere Laschen (3a2) befestigt ist, welche über elastische Verbindungen (AL) fest mit dem Fahrzeugaufbau (C) verbunden sind, und die um eine Querachse schwenkbeweglich am entsprechenden Ende des Querträgers (3) gelagert sind, **dadurch gekennzeichnet, dass** sie ein Tragteil (4) enthält, das im wesentlichen in der Mitte des rohrförmigen Querträgers (3) starr befestigt ist, sowie zwei im wesentlichen querverlaufende Haltestäbe (6, 7), von denen jeder mit einem Ende an dem Tragteil (4) über ein Gelenk (AP) und mit seinem gegenüberliegenden Ende am entsprechenden Radzapfen (9) über ein Gelenk (A6, A7) befestigt ist, wobei jeder Haltestab (6, 7) so angeordnet ist, dass er je nach senkrechten Ein- und Ausfederungen des Rads eine veränderliche Länge hat.

2. Hinterachse nach Anspruch 1, **dadurch gekennzeichnet, dass** das Tragteil (4) einen Befestigungskörper (20) zur Befestigung an dem Querträger (3) und ein im wesentliches bügelförmiges Teil (21) zum Abstützen der Gelenke (AP) der beiden Haltestäbe (6, 7) enthält, das fest mit dem Befestigungskörper (20) verbunden ist und sich hinter dem Querträger (3) befindet.

3. Hinterachse nach Anspruch 2, **dadurch gekennzeichnet, dass** der Befestigungskörper (20) den Querträger (3) umschließt und an diesem über zwei Flansche (210a, 210b) befestigt ist, die sich unter dem Querträger (3) in einer senkrechten Ebene befinden, die durch die Achse des Querträgers (3) geht, wobei der eine Befestigungsflansch den einen Schenkel des Bügelteils (21) definiert.

4. Hinterachse nach Anspruch 3, **dadurch gekennzeichnet, dass** der Befestigungskörper (20) zwei Halbschalen (20a, 20b) enthält, die den Querträger (3) umschließen, und dass die Wand des Bügelteils (21) hinter dem Querträger (3) fest mit der hinteren Halbschale (20a) des Befestigungskörpers (20) verbunden ist.

5. Hinterachse nach Anspruch 2, **dadurch gekennzeichnet, dass** der Befestigungskörper (20) zwei getrennte Halbschalen (20c, 20e) enthält, die den Querträger (3) umschließen und an diesem über zwei Flanschpaare (210c, 210d) und (210e, 210f) befestigt sind, die zu den jeweiligen Halbschalen (20c) und (20e) gehören.

6. Hinterachse nach Anspruch 5, **dadurch gekennzeichnet, dass** das Teil (21) zwei parallel verlaufende ebene Platten (21 b, 21c) enthält, deren Mittelebene durch die Achse des Querträgers (3) geht.

7. Hinterachse nach einem der vorangehenden Ansprüche, **dadurch gekennzeichnet, dass** jeder Haltestab (6, 7) an seinem mit dem Tragteil (4) verbundenen Endabschnitt zwei Teleskopelemente (6a, 7a; 6b, 7b) enthält, und zwar ein äußeres und ein inneres, die jeweils einen festen Querendanschlag (10, 12) enthalten, zwischen denen sich ein Federglied (11) abstützt, das axial zusammengedrückt werden kann, wenn das Rad senkrecht einfedert.

8. Hinterachse nach Anspruch 7, **dadurch gekennzeichnet, dass** das Federglied (11) eine spiralförmige Druckfeder ist.

9. Hinterachse nach Anspruch 7, **dadurch gekennzeichnet, dass** das Federglied (11) ein kegelstumpfförmiger Gummiblock ist, der fest mit dem Endanschlag des inneren Teleskopelements (6a, 7a) verbunden ist.

10. Hinterachse nach einem der Ansprüche 7 bis 9, **dadurch gekennzeichnet, dass** das äußere Teleskopelement (6b, 7b) eines jeden Haltestabs (6, 7) an seinem Ende mit dem Tragteil (4) über das entsprechende Gelenk verbunden ist, das ein elastisches Gelenk oder Kugelgelenk ist.

11. Hinterachse nach Anspruch 1 bis 6, **dadurch gekennzeichnet, dass** das jeden Haltestab (6, 7) mit dem Tragteil (4) verbindende Gelenk (AP) elastisch ist und eine Hülse auf Gummibasis (17) mit parallel zur Längsachse des Fahrzeugs verlaufender Längsachse und mit zwei diametral gegenüberliegenden Innenhohlräumen (17a) enthält, die eine radiale Verformung der Hülse (17) bei senkrechten Ein/Ausfederungen des Rads gestattet.

12. Hinterachse nach Anspruch 11, **dadurch gekennzeichnet, dass** die Hohlräume (17a) im Querschnitt jeweils die Form einer bogenförmigen Aussparung aufweisen.

13. Hinterachse nach einem der vorangehenden Ansprüche, **dadurch gekennzeichnet, dass** das Tragteil (4) ein aus Aluminium gegossenes Teil ist.

## Claims

1. A rear axle assembly for a motor vehicle comprising two longitudinal trailing arms (1) for supporting the rear wheels, said trailing arms being joined together by a tubular cross member (3) - fixed to the body (C) of the vehicle by two front lugs (3a1) and two rear lugs (3a2) firmly attached to the body (C) by elastic connections (AL) - and being pivot-mounted at the corresponding end of the cross member (3) about a transverse axis, **characterized in that** said assembly includes a support component (4) rigidly fixed substantially in the middle of the tubular cross member (3); and two substantially transverse retaining bars (6, 7), each of which has one end fixed to the support component (4) by a joint (AP) and its opposite end fixed to the corresponding wheel pivot (9) by a joint (A6, A7), each retaining bar (6, 7) being disposed in such a way as to have a variable length depending on the vertical clearance of the wheel in the driven and released states.

2. A rear axle assembly according to Claim 1, **characterized in that** the support component (4) comprises a body (20) for fixing to the cross member (3) and a part (21) substantially in the form of a stirrup for supporting the joints (AP) of the two retaining bars (6, 7), this part (21) being integral with the fixing body (20) and located at the rear of the cross member (3).

3. A rear axle assembly according to Claim 2, **characterized in that** the fixing body (20) encloses the cross member (3) and is fixed to said cross member (3) by two flanges (210a, 210b) located underneath the cross member (3) in the vertical plane passing through the axis of the cross member (3), one of the fixing flanges defining one of the sides of the stirrup-shaped part (21).

4. A rear axle assembly according to Claim 3, **characterized in that** the fixing body (20) comprises two half-shells (20a, 20b) enclosing the cross member (3) and **in that** the wall of the stirrup-shaped part (21) at the rear of the cross member (3) is integral with the rear half-shell (20a) of the fixing body (20).

5. A rear axle assembly according to Claim 2, **characterized in that** the fixing body (20) comprises two separate half-shells (20c, 20e) which enclose the cross member (3) and are fixed to the latter by two pairs of flanges (210c, 210d) and (210e, 210f) belonging to the half-shells (20c) and (20e) respectively.

6. A rear axle assembly according to Claim 5, **characterized in that** the part (21) comprises two flat parallel plates (21b, 21c), of which the median plane passes through the axis of the cross member (3).

7. A rear axle assembly according to one of the preceding claims, **characterized in that** each retaining bar (6, 7) has, at its end portion connected to the support component (4), two external and internal telescopic elements (6a, 7a; 6b, 7b) each having two fixed transverse end stops (10, 12) between which an elastic member (11) is supported which is capable of being compressed in axial direction upon vertical clearance of the wheel in the driven state.

8. A rear axle assembly according to Claim 7, **characterized in that** the elastic member (11) is a helical compression spring.

9. A rear axle assembly according to Claim 7, **characterized in that** the elastic member (11) is a rubber block having the shape of a truncated cone which is firmly attached to the end stop of the internal telescopic element (6a, 7a).

10. A rear axle assembly according to one of Claims 7 to 9, **characterized in that** the external telescopic element (6b, 7b) of each retaining bar (6, 7) is connected at its end to the support component (4) by the corresponding joint which is an elastic joint or a swivel joint.

11. A rear axle assembly according to Claims 1 to 6, **characterized in that** the joint (AP) connecting each retaining bar (6, 7) to the support component (4) is elastic and comprises a rubber-based sleeve (17) with its longitudinal axis parallel to the longitudinal axis of the vehicle and having two diametrically opposed internal cavities (17a) permitting radial deformation of the sleeve (17) upon vertical clearance of the wheel.

12. A rear axle assembly according to Claim 11, **characterized in that** the cavities ( 17a) each have in cross section the shape of an arcuate aperture.

13. A rear axle assembly according to one of the preceding claims, **characterized in that** the support component (4) is an aluminium casting.
